# EUROPÄISCHE PATENTANMELDUNG

(11) **EP 3 331 137 A1**
(43) Veröffentlichungstag der Anmeldung: **06.06.2018**
(21) Anmeldenummer: 16202098.6
(22) Anmeldetag: 05.12.2016
(51) Int. Cl.: H02K 15/00, H02K 3/50, H02K 3/30, H02K 3/51

(54) **LÄUFER FÜR EINE ELEKTRISCHE MASCHINE, VERFAHREN ZUM ZUSAMMENBAUEN UND AUSEINANDERBAUEN DES LÄUFERS**

(71) Anmelder: Siemens Aktiengesellschaft, 80333 München (DE)
(72) Erfinder: B R, Chethan Ravi, 577134 Chikmangalur (IN); Belhareth, Kais, 45475 Mülheim an der Ruhr (DE); Höhner, Rene, 45881 Gelsenkirchen (DE); Perumal, Venkateswaran, 560100 Bangalore (IN)

(57) **Zusammenfassung**

Die Erfindung betrifft einen Läufer für eine elektrische Maschine, mit einem Wickelkopf und einem Wickelkopfring (1), der radial außen auf den Wickelkopf aufgeschrumpft ist und ein Formgedächtnismaterial aufweist.

## Beschreibung

Läufer für eine elektrische Maschine, Verfahren zum Zusammenbauen und Auseinanderbauen des Läufers

Die Erfindung betrifft einen Läufer für eine elektrische Maschine, ein Verfahren zum Zusammenbauen des Läufers und ein Verfahren zum Auseinanderbauen des Läufers.

Eine elektrische Maschine, wie beispielsweise ein Generator oder ein Motor, weist einen Ständer und einen Läufer auf. Der Ständer und der Läufer weisen jeweils Wickelköpfe elektrischer Leiter auf. Insbesondere die Wickelköpfe des Läufers neigen dazu im Betrieb der elektrischen Maschine zu schwingen. Die Schwingungen der Wickelköpfe können zu einer Verkürzung ihrer Lebensdauer führen. Die elektrische Maschine weist herkömmlich eine Läuferkappe auf, die um den Wickelkopf angeordnet ist und diesen versteift, so dass der Wickelkopf weniger dazu neigt, im Betrieb der elektrischen Maschine zu schwingen.

Die Läuferkappe kann beispielsweise aus Metall hergestellt sein. Zum Aufbringen der Läuferkappe auf den Wickelkopf wird die Läuferkappe erwärmt und anschließend durch Abkühlen auf den Wickelkopf aufgeschrumpft, wodurch die Läuferkappe unverrutschbar an dem Wickelkopf befestigt wird. Dazu ist es erforderlich, dass die Läuferkappe auf Temperaturen von ungefähr 300 °C erwärmt wird. Dies ist jedoch nachteilig, weil dies ein aufwändiges Verfahren darstellt und zudem diese hohen Temperaturen den Wickelkopf beschädigen können. Zudem ist die Läuferkappe aus Metall relativ schwer.

Alternativ kann die Läuferkappe aus einem Verbundwerkstoff gefertigt sein, die wesentlich leichter als die Läuferkappe aus Metall ist. Die Läuferkappe aus dem Verbundwerkstoff kann jedoch nicht auf den Wickelkopf aufgeschrumpft werden, weil der Verbundwerkstoff inelastisch ist und zudem durch ein Erwärmen beschädigt werden kann. Um die Läuferkappe aus dem Verbundwerkstoff unverrutschbar an dem Wickelkopf zu befestigen, ist ein Befestigungsmittel erforderlich. Der Einsatz des Befestigungsmittels ist jedoch durch den Unterschied des galvanischen Potentials zwischen dem Verbundwerkstoff und dem Befestigungsmittel limitiert. Zudem erhöht sich die Anzahl der eingesetzten Bauteile, was im Widerspruch zu einem robusten und einfachen Design steht.

Aufgabe der Erfindung ist es daher einen alternativen Läufer für eine elektrische Maschine, ein alternatives Verfahren zum Zusammenbauen des Läufers und ein alternatives Verfahren zum Auseinanderbauen des Läufers zu schaffen.

Der erfindungsgemäße Läufer für eine elektrische Maschine weist einen Wickelkopf und einen Wickelkopfring auf, der radial außen auf den Wickelkopf aufgeschrumpft ist und ein Formgedächtnismaterial aufweist. Die elektrische Maschine kann ein Generator und/oder ein elektrischer Motor sein. Das Formgedächtnismaterial zeichnet sich dadurch aus, dass es sich trotz einer Verformung durch ein Erwärmen an eine frühere Form vor der Verformung erinnern kann und diese frühere Form durch das Erwärmen einnimmt. Die Temperaturen, die nötig sind, um den Wickelkopfring auf den Wickelkopf aufzuschrumpfen sind wesentlich geringer als für eine Läuferkappe auf Metall. Dadurch ist der Wickelkopfring vorteilhaft einfach zu montieren und Beschädigungen des Wickelkopfes sind unwahrscheinlich.

Das Formgedächtnismaterial weist bevorzugt ein metallisches Formgedächtnismaterial, insbesondere einen metallischen Formgedächtnisdraht, und/oder ein Formgedächtnispolymer auf. Beispielsweise kann der Wickelkopfring einen Ring aus dem metallischen Formgedächtnismaterial aufweisen. Es ist bevorzugt, dass der Formgedächtnisdraht mindestens eine Vorzugsrichtung hat, die im Wesentlichen in Umfangsrichtung des Wickelkopfrings ist. Dadurch kann vorteilhaft eine starke Verkürzung des Durchmessers des Wickelkopfringes beim Aufschrumpfen erreicht werden, was vorteilhaft in einer starken Befestigung des Wickelkopfringes an dem Wickelkopf resultiert. Das metallische Formgedächtnismaterial weist bevorzugt eine Legierung aufweisend Nickel und Titan, eine Legierung aufweisend Kupfer, Zink und Aluminium und/oder eine Legierung aufweisend Kupfer, Aluminium und Nickel auf. Es ist bevorzugt, dass der Formgedächtnisdraht in dem Wickelkopfring in Form von Ringen, einer Helix und/oder einem Netz vorliegt.

Es ist bevorzugt, dass der Wickelkopfring einen mit Fasern verstärkten Kunststoff aufweist. Der mit Fasern verstärkte Kunststoff ist vorteilhaft leichter als ein Metall, wobei die Festigkeit zumindest vergleichbar mit einem Metall ist. Die Kombination mit dem Formgedächtnismaterial erlaubt überhaupt erst den Einsatz des mit Fasern verstärkten Kunststoffs, weil mittels des Formgedächtnismaterials der Wickelkopfring aufgeschrumpft werden kann und dies bei derart niedrigen Temperaturen erfolgt, dass keine Beschädigungen des mit Fasern verstärkten Kunststoffs auftreten können. Der Kunststoff weist bevorzugt ein Epoxidharz auf. Die Fasern weisen bevorzugt Carbonfasern, Keramikfasern, insbesondere Aluminiumoxidfasern, Basaltfasern, Aramidfasern, Glasfasern und/oder Borfasern auf.

Es ist bevorzugt, dass die Fasern eine Vorzugsrichtung haben, die im Wesentlichen in Axialrichtung des Wickelkopfsrings oder mit einem Winkel relativ zur Umfangsrichtung des Wickelkopfsrings ist, der von 15° bis 75° ist. Durch die Vorzugsrichtung kann vorteilhaft eine hohe Festigkeit in Richtung besonders hoher Beanspruchungen erreicht werden. Weil die Fasern sind anfällig gegen eine Druckbelastung sind, wird ihre Belastung vermindert, wenn die Vorzugsrichtung der Fasern verschieden ist von der Vorzugsrichtung des Formgedächtnisdrahts, insbesondere, wenn die beiden Vorzugsrichtungen mindestens um 15° voneinander abweichen.

Das erfindungsgemäße Verfahren zum Zusammenbauen des Läufers weist die Schritte auf: a) Kühlen des Wickelkopfrings; b) Weiten des Durchmessers des Wickelkopfrings; c) Anordnen des Wickelkopfrings radial außerhalb des Wickelkopfs; d) Erwärmen des Wickelkopfsrings, wodurch der Wickelkopfring auf den Wickelkopf aufgeschrumpft wird. Durch das Verfahren wird vorteilhaft erreicht, dass der Wickelkopfring sich selbst zentriert. Damit werden vorteilhaft Unwuchten im Betrieb der elektrischen Maschine unterbunden. Indem sich der Wickelkopfring selbst zentriert wird zudem der Wickelkopf mit einer gleichmäßig um seinen Umfang verteilten Radialkraft belastet, wodurch lokale Spannungserhöhungen in dem Wickelkopf vorteilhaft unterbunden werden und damit seine Lebensdauer lang ist. Zum Aufschrumpfen des Wickelkopfes in Schritt d) sind zudem lediglich Temperaturen erforderlich, die im Bereich von 0 °C bis 100 °C liegen. Dies sind Temperaturen, die einfach zu erzeugen sind und zudem keine Beschädigung des Wickelkopfes verursachen können.

Es ist bevorzugt, dass das Formgedächtnismaterial den metallischen Formgedächtnisdraht aufweist und in Schritt a) auf eine Temperatur niedriger als eine Temperatur T₁ abgekühlt wird, bei der kommend von einer überwiegend Austenitphase des Formgedächtnisdraht sich der Anteil einer Martensitphase des Formgedächtnisdrahts erhöht sowie in Schritt d) auf eine Temperatur höher als T₄ erwärmt wird, bei der kommend von der überwiegend Martensitphase des Formgedächtnisdrahts sich der Anteil der Austenitphase nicht weiter erhöht. In Schritt a) wird bevorzugt auf eine Temperatur höher oder gleich T₂ abgekühlt, bei kommend von einer überwiegend Austenitphase des Formgedächtnisdraht der Anteil der Martensitphase des Formgedächtnisdrahts im Wesentlichen 100 % erreicht.

Das erfindungsgemäße Verfahren zum Auseinanderbauen des Läufers weist bevorzugt die Schritte auf: f) Kühlen des Wickelkopfrings; g) Weiten des Durchmessers des Wickelkopfrings; h) Abnehmen des Wickelkopfrings von dem Wickelkopf. Im Gegensatz zu einer Läuferkappe aus Metall wird der Wickelkopfring zum Auseinanderbauen gekühlt und nicht erwärmt, was vorteilhaft Beschädigungen des Wickelkopfs beim Auseinanderbauen weniger wahrscheinlich macht.

Es ist bevorzugt, dass das Formgedächtnismaterial den metallischen Formgedächtnisdraht aufweist und in Schritt f) auf eine Temperatur niedriger als eine Temperatur T₁ abgekühlt wird, bei der kommend von einer überwiegend Austenitphase des Formgedächtnisdraht sich der Anteil einer Martensitphase des Formgedächtnisdrahts erhöht. In Schritt f) wird bevorzugt auf eine Temperatur höher oder gleich T₂ abgekühlt, bei kommend von einer überwiegend Austenitphase des Formgedächtnisdraht der Anteil der Martensitphase des Formgedächtnisdrahts im Wesentlichen 100 % erreicht.

Im Folgenden wird anhand der beigefügten schematischen Zeichnungen die Erfindung näher erläutert. Es zeigen:
- Figur 1: eine Draufsicht auf einen Wickelkopfring mit einem Formgedächtnisdraht,
- Figur 2: eine Draufsicht auf einen Wickelkopfring mit einer Faser, die eine erste Vorzugsrichtung hat,
- Figur 3: eine Draufsicht auf einen Wickelkopfring mit einer Faser, die eine zweite Vorzugsrichtung hat,
- Figur 4: eine Draufsicht auf einen Wickelkopfring mit einer Faser, die eine dritte Vorzugsrichtung hat,
- Figur 5: einen Längsschnitt durch einen Läufer,
- Figur 6: eine Hysteresekurve eines Formgedächtnismaterials,
- Figuren 7 und 8: ein Verfahren zum Zusammenbauen des Läufers und
- Figur 9: ein Verfahren zum Auseinanderbauen des Läufers.

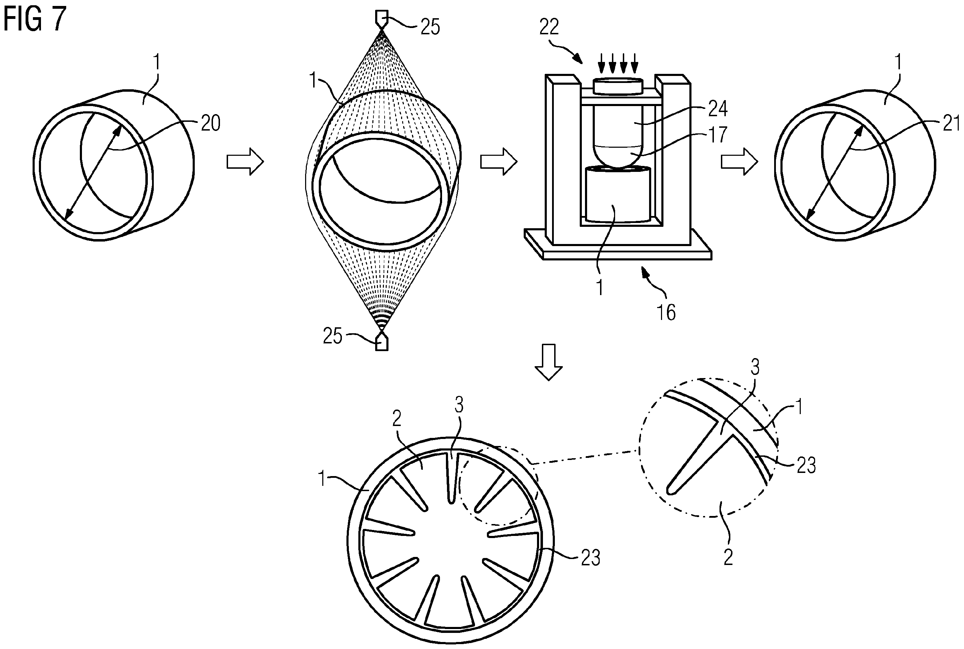

Wie es aus Figuren 7 bis 9 ersichtlich ist, weist eine elektrische Maschine, wie beispielsweise ein Generator und/oder ein elektrischer Motor, einen Läufer 2 auf, der im Betrieb der elektrischen Maschine rotiert. Der Läufer 2 weist eine Mehrzahl an Nuten 3 auf, in die elektrische Leiter (nicht in den Figuren gezeigt) eingebracht sind. Die elektrischen Leiter treten an den beiden Stirnseiten des Läufers 2 aus diesem heraus und bilden dort einen Wickelkopf. Der Läufer 2 weist einen Wickelkopfring 1 auf, der radial außen auf den Wickelkopf aufgeschrumpft ist. Der Wickelkopfring 1 weist ein Formgedächtnismaterial auf.

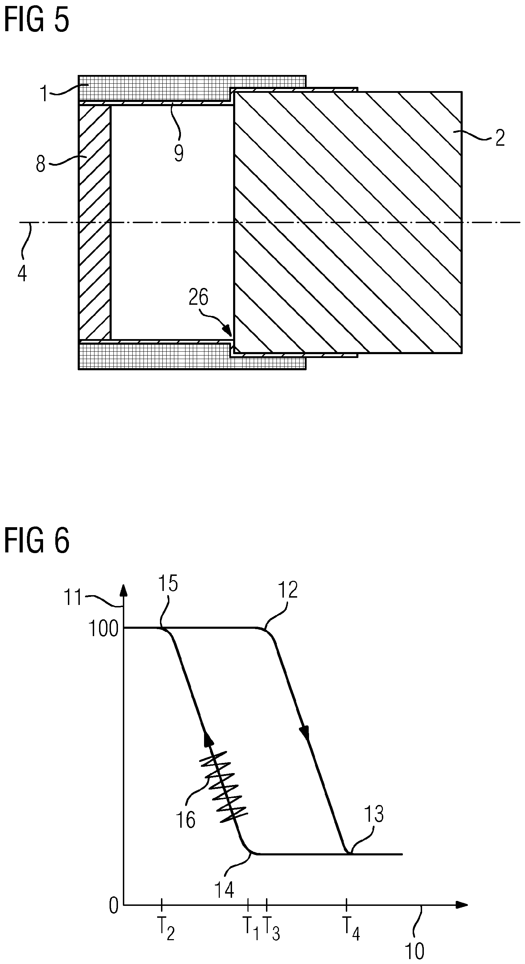

Figuren 5 und 7 bis 9 zeigen, dass der Wickelkopfring 2 auch auf den Läufer 2 aufgeschrumpft ist, so dass er in Richtung der Rotorachse 4 von dem Läufer 2 absteht. Wie es aus Figur 5 ersichtlich ist, weist der Wickelkopfring 1 an seiner radial innen liegenden Fläche eine Stufe 26 auf, die an die Stirnseite des Läufers 2 anschlägt. Damit ist die Axialposition des Wickelkopfrings 1 festlegbar. Weiterhin weist der Wickelkopfring 1 an seiner radial innen liegenden Seite eine Isolationsschicht 9 auf, die die radial innen liegende Seite vollständig bedeckt. Die Isolationsschicht 9 sorgt für eine elektrische Isolierung des Wickelkopfrings 1 von dem Läufer 2 und von dem Wickelkopf. Ferner weist der Läufer 2 eine Endplatte 8 auf, die an dem axialen Ende des Wickelkopfrings 1 und radial innerhalb des Wickelkopfrings 1 angeordnet ist. Die Isolationsschicht 9 erstreckt sich dabei in einem Spalt zwischen dem Wickelkopfring 1 und der Endplatte 8.

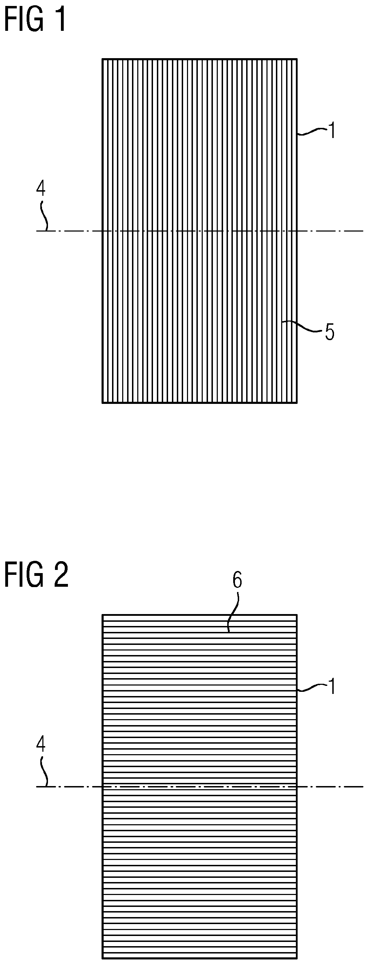

Wie es aus Figur 1 ersichtlich ist, weist der Wickelkopfring 1 ein Formgedächtnisdraht 5 auf. Der Formgedächtnisdraht 5 hat eine Vorzugsrichtung, die im Wesentlichen in Umfangsrichtung des Wickelkopfrings 1 ist. Der Formgedächtnisdraht 5 gemäß Figur 1 kann mehrfach umlaufend in dem Wickelkopfring 1 angeordnet sein. Ebenso ist denkbar, dass der Formgedächtnisdraht 5 zu mehreren geschlossenen Ringen geformt ist, die im Wesentlichen parallel in dem Wickelkopfring 1 angeordnet sind. Auch ist denkbar, dass der Formgedächtnisdraht 5 die Form eines Netzes hat. Ferner ist denkbar, dass der Formgedächtnisdraht 5 eine weitere Vorzugsrichtung hat, die einen von Null verschiedenen Winkel mit der Umfangsrichtung einschließt. Beispielsweise kann der Formgedächtnisdraht mit der weiteren Vorzugsrichtung in Form einer Helix angeordnet sein. Der Formgedächtnisdraht kann beispielsweise eine Legierung aufweisend Nickel und Titan, eine Legierung aufweisend Kupfer, Zink und Aluminium und/oder eine Legierung aufweisend Kupfer, Aluminium und Nickel aufweisen.

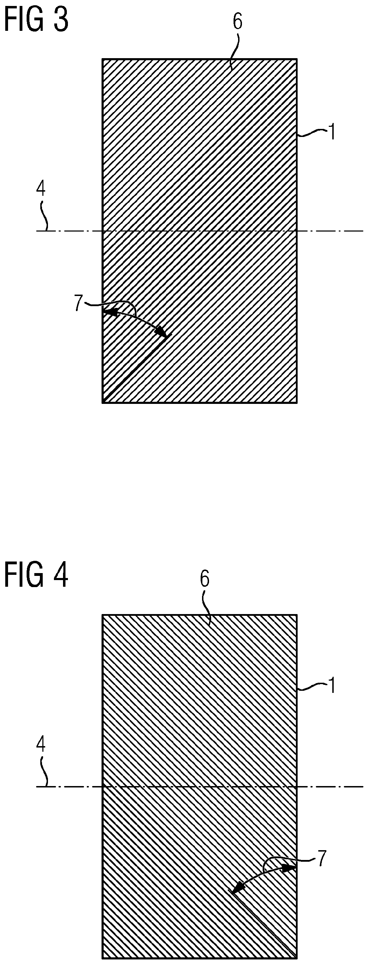

Der Wickelkopfring gemäß Figuren 2 bis 4 weist einen mit Fasern 6 verstärkten Kunststoff auf. Der Kunststoff kann beispielsweise ein Epoxidharz sein. Die Fasern können Carbonfasern, Keramikfasern, insbesondere Aluminiumoxidfasern, Basaltfasern, Aramidfasern, Glasfasern und/oder Borfasern aufweisen. Die Fasern 6 gemäß Figuren 2 bis 4 haben eine Vorzugsrichtung. Die Vorzugsrichtung gemäß Figur 2 ist in Axialrichtung. Die Vorzugsrichtung gemäß Figur 3 schließt einen Winkel 7 mit der Umfangsrichtung von 15° bis 75° ein. Die Vorzugsrichtung gemäß Figur 4 schließt einen Winkel 7 mit der Umfangsrichtung von -15° bis -75° ein.

Folgende Kombinationen an Vorzugsrichtungen des Formgedächtnisdrahts 5 und der Fasern 6 sind beispielsweise denkbar:

| | Formgedächtnisdraht 5 | Fasern 6 |
|---|---|---|
| Beispiel 1 | im Wesentlichen Umfangsrichtung | im Wesentlichen Umfangsrichtung |
| Beispiel 2 | im Wesentlichen Umfangsrichtung | Winkel mit Umfangsrichtung 15° bis 75° |
| Beispiel 3 | im Wesentlichen Umfangsrichtung / Winkel mit Umfangsrichtung 15° bis 75° | im Wesentlichen Umfangsrichtung |
| Beispiel 4 | im Wesentlichen Umfangsrichtung / Winkel mit Umfangsrichtung 15° bis 75° | Winkel mit Umfangsrichtung 15° bis 75° |

In den Beispielen 3 und 4 weist der Formgedächtnisdraht 5 zwei Vorzugsrichtungen auf. Besonders bevorzugt sind die Beispiele 2 bis 4, weil hier der Formgedächtnisdraht 5 und die Fasern 6 in einem Winkel zueinander angeordnet sind, wodurch die Fasern 6 eine lange Lebensdauer haben. Die radiale Druckkraft, mit der der Wickelkopfring 1 im aufgeschrumpften Zustand auf den Wickelkopf wirkt, kann über den Volumenanteil und/oder die Orientierung des Formgedächtnisdrahts in dem Wickelkopfring 1 gesteuert werden.

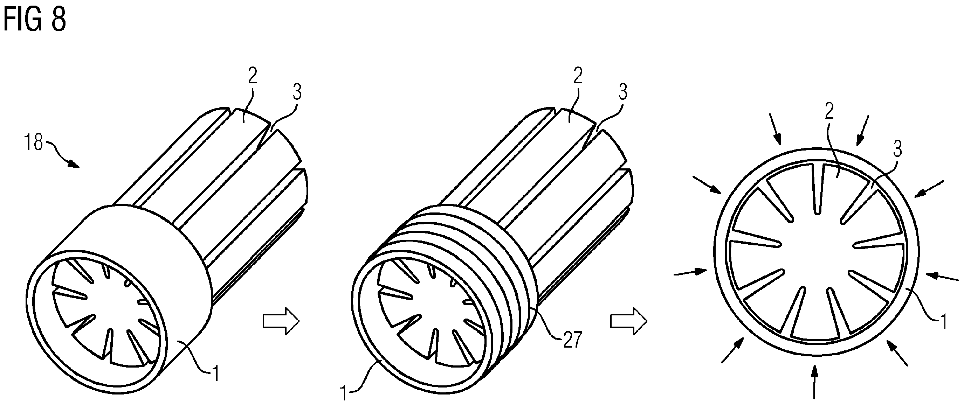

Figuren 7 und 8 veranschaulichen ein Verfahren zum Zusammenbauen des Läufers 2. Der Wickelkopfring 1 hat zunächst einen ersten Ringdurchmesser 20. Der Wickelkopfring 1 wird in einem Schritt a) gekühlt. Dazu kann der Wickelkopfring 1 beispielsweise mit mindestens einer Düse 25 mit flüssigem Stickstoff besprüht werden. Ebenso ist es möglich den Wickelkopfring 1 in einem kryogenen Bad einzutauchen. Der Durchmesser des gekühlten Wickelkopfrings 1 wird anschließend geweitet 16. Dazu wird gemäß Figur 7 der Wickelkopfring 1 in eine Ringweitungsvorrichtung 22 eingebracht. Die Ringweitungsvorrichtung 22 weist eine Kalotte 24 auf, die in das Innere des Wickelkopfringes 1 hineingedrückt wird. Die Kalotte 24 geht in einen zylinderförmigen Abschnitt 17 über, so dass der vollständige Wickelkopfring 1 auf einen zweiten Ringdurchmesser 21 geweitet werden kann. Der zweite Ringdurchmesser 21 ist identisch mit dem Durchmesser des zylinderförmigen Abschnitts 17. Der zweite Ringdurchmesser 21 wird dabei derart gewählt, dass er über den Wickelkopf geschoben werden und kann und sich dabei ein Radialspalt 23 zwischen dem Wickelkopf und dem Wickelkopfring 21 ausbildet.

Figur 8 veranschaulicht die Ringmontage 18 des Wickelkopfrings 1 mit dem zweiten Ringdurchmesser 21. Der Wickelkopfring 1 wird in einem Schritt c) radial außerhalb des Wickelkopfes angeordnet. Durch ein Erwärmen in einem Schritt d) nimmt aufgrund des Formgedächtnismaterials der Wickelkopfring 1 wieder im Wesentlichen den ersten Ringdurchmesser 20 an, wodurch der Wickelkopfring 1 auf den Wickelkopf aufgeschrumpft wird. Zum Erwärmen kann eine Heizungsvorrichtung 27 vorgesehen werden. Die Heizungsvorrichtung 27 kann beispielsweise durch Heizdrähte gebildet sein, die um den Wickelkopfring 1 gewickelt sind.

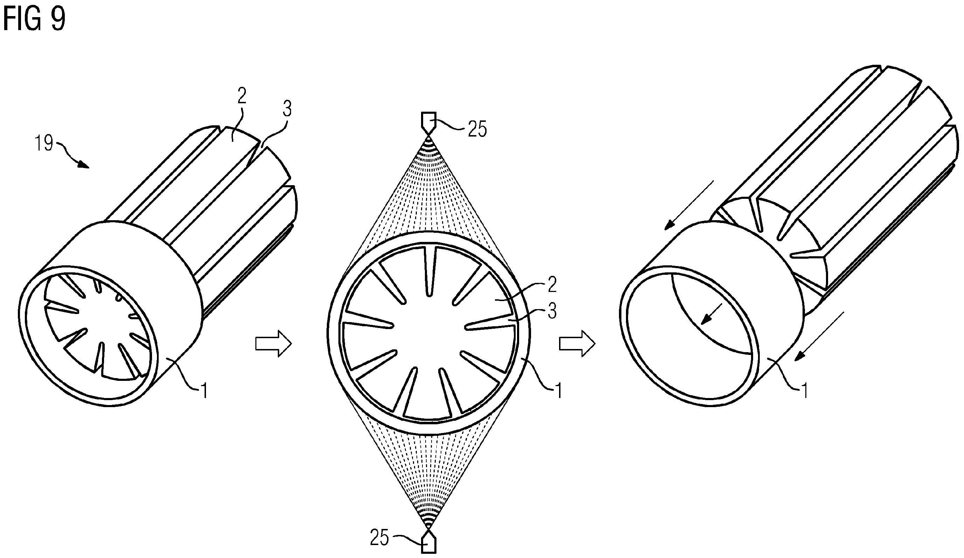

Figur 9 veranschaulicht ein Verfahren zum Auseinanderbauen 19 des Läufers 2. Das Verfahren weist die Schritte auf: f) Kühlen des Wickelkopfrings 1; g) Weiten 16 des Durchmessers des Wickelkopfrings 1; h) Abnehmen des Wickelkopfrings 1 von dem Wickelkopf.

Figur 6 veranschaulicht, wie die Temperaturen gefunden werden können, auf die der Wickelkopfring 1 in den Schritten a) und f) abgekühlt wird und in Schritt d) erwärmt wird. Figur 6 zeigt eine Hysteresekurve für ein Metall, das eine Austenitphase und eine Martensitphase hat. Über der Horizontalchse 10 ist die Temperatur und über die Vertikalachse 11 ist der Volumenanteil der Martensitphase in dem Metall aufgetragen. Ausgehend von einem Anteil der Martensitphase von 100 % beginnt die Ausbildung der Austenitphase bei einem Punkt 12, zu der eine Temperatur T₃ gehört. Bei einem Punkt 13, zu der eine Temperatur T₄ gehört, ist ein maximaler Volumenanteil der Austenitphase erreicht. Wird anschließend das Metall abgekühlt, so beginnt bei einem Punkt 14, zu der eine Temperatur T₁ gehört, sich der Volumenanteil der Martensitphase zu erhöhen. Bei einem Punkt 15, zu der eine Temperatur T₂ gehört, ist ein Volumenanteil der Martensitphase von 100 % erreicht. Es gilt: T₂<T₁<T₃<T₄. In Schritten a) und f) wird auf eine Temperatur Tₖ abgekühlt, für die gilt: T₂≤Tₖ≤T₁. In Schritt d) wird auf eine Temperatur Tₑ erwärmt, für die gilt: T₄≤Tₑ.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Läufer für eine elektrische Maschine,
mit einem Wickelkopf und einem Wickelkopfring (1), der radial außen auf den Wickelkopf aufgeschrumpft ist und ein Formgedächtnismaterial aufweist.

2. Läufer gemäß Anspruch 1,
wobei das Formgedächtnismaterial ein metallisches Formgedächtnismaterial, insbesondere einen metallischen Formgedächtnisdraht (5), und/oder ein Formgedächtnispolymer aufweist.

3. Läufer gemäß Anspruch 2,
wobei der Formgedächtnisdraht (5) mindestens eine Vorzugsrichtung hat, die im Wesentlichen in Umfangsrichtung des Wickelkopfrings (1) ist.

4. Läufer gemäß Anspruch 2 oder 3,
wobei das metallische Formgedächtnismaterial eine Legierung aufweisend Nickel und Titan, eine Legierung aufweisend Kupfer, Zink und Aluminium und/oder eine Legierung aufweisend Kupfer, Aluminium und Nickel aufweist.

5. Läufer gemäß einem der Ansprüche 2 bis 4,
wobei der Formgedächtnisdraht in dem Wickelkopfring (1) in Form von Ringen, einer Helix und/oder einem Netz vorliegt.

6. Läufer gemäß einem der Ansprüche 1 bis 5,
wobei der Wickelkopfring (1) einen mit Fasern (6) verstärkten Kunststoff aufweist.

7. Läufer gemäß Anspruch 6,
wobei der Kunststoff ein Epoxidharz aufweist.

8. Läufer gemäß Anspruch 6 oder 7,
wobei die Fasern (6) Carbonfasern, Keramikfasern, insbesondere Aluminiumoxidfasern, Basaltfasern, Aramidfasern, Glasfasern und/oder Borfasern aufweisen.

9. Läufer gemäß einem der Ansprüche 6 bis 8,
wobei die Fasern (6) eine Vorzugsrichtung haben, die im Wesentlichen in Axialrichtung des Wickelkopfsrings (1) oder mit einen Winkel (7) relativ zur Umfangsrichtung des Wickelkopfsrings (1) ist, der von 15° bis 75° ist.

10. Verfahren zum Zusammenbauen eines Läufers (2) gemäß einem der Ansprüche 1 bis 9, mit den Schritten:
a) Kühlen des Wickelkopfrings (1);
b) Weiten (16) des Durchmessers des Wickelkopfrings (1);
c) Anordnen des Wickelkopfrings (1) radial außerhalb des Wickelkopfs;
d) Erwärmen des Wickelkopfsrings (1), wodurch der Wickelkopfring (1) auf den Wickelkopf aufgeschrumpft wird.

11. Verfahren gemäß Anspruch 10,
wobei das Formgedächtnismaterial den metallischen Formgedächtnisdraht (5) aufweist und in Schritt a) auf eine Temperatur niedriger als eine Temperatur T₁ abgekühlt wird, bei der kommend von einer überwiegend Austenitphase des Formgedächtnisdraht (5) sich der Anteil einer Martensitphase des Formgedächtnisdrahts (5) erhöht sowie in Schritt d) auf eine Temperatur höher als T₄ erwärmt wird, bei der kommend von der überwiegend Martensitphase des Formgedächtnisdrahts (5) sich der Anteil der Austenitphase nicht weiter erhöht.

12. Verfahren gemäß Anspruch 11,
wobei in Schritt a) auf eine Temperatur höher oder gleich T₂ abgekühlt wird, bei kommend von einer überwiegend Austenitphase des Formgedächtnisdraht (5) der Anteil der Martensitphase des Formgedächtnisdrahts (5) im Wesentlichen 100 % erreicht.

13. Verfahren zum Auseinanderbauen eines Läufers (2) gemäß einem der Ansprüche 1 bis 9, mit den Schritten:
f) Kühlen des Wickelkopfrings (1);
g) Weiten (16) des Durchmessers des Wickelkopfrings (1);
h) Abnehmen des Wickelkopfrings (1) von dem Wickelkopf.

14. Verfahren gemäß Anspruch 13,
wobei das Formgedächtnismaterial den metallischen Formgedächtnisdraht (5) aufweist und in Schritt f) auf eine Temperatur niedriger als eine Temperatur T₁ abgekühlt wird, bei der kommend von einer überwiegend Austenitphase des Formgedächtnisdraht (5) sich der Anteil einer Martensitphase des Formgedächtnisdrahts (5) erhöht.

15. Verfahren gemäß Anspruch 14,
wobei in Schritt f) auf eine Temperatur höher oder gleich T₂ abgekühlt wird, bei kommend von einer überwiegend Austenitphase des Formgedächtnisdraht (5) der Anteil der Martensitphase des Formgedächtnisdrahts (5) im Wesentlichen 100 % erreicht.
